# EUROPEAN PATENT APPLICATION

(11) **EP 3 340 157 A1**
(43) Date of publication of application: **27.06.2018**
(21) Application number: 16205873.9
(22) Date of filing: 21.12.2016
(51) Int. Cl.: G06Q 30/06

(54) **SYSTEMS AND METHODS FOR AUTOMATED LEASING OF UNATTENDED ASSETS**

(71) Applicant: Mastercard International Incorporated, Purchase NY 10577 (US)
(72) Inventor: HOSNY, Ahmed, Dublin, 18 (IE); GROARKE, Peter, Dublin, 18 (IE)
(74) Representative: Gill Jennings & Every LLP

(57) **Abstract**

Systems and methods for automated leasing of unattended assets are provided. The assets are registered with an asset-leasing platform associated with a payment network. In response to a query about an asset received from a mobile, the platform uses an asset identifier from the query to retrieve a token and leasing data of the asset from an asset database and transmits both toward the mobile. When a P2P transaction concerning the asset is pre-authorized with reference to an account identifier of a customer of the mobile, the platform associates the account identifier with the token in the asset database, and then, in response to a request from a terminal of the asset concerning the account identifier, the platform transmits toward the terminal a confirmation that the account identifier is associated with the token to cause the terminal to release the asset in lease to the customer.

## Description

The present disclosure relates to methods and systems for enabling automated asset lease transactions, and in particular to enabling and processing a spontaneous in-person lease of a secured, unattended asset.

### BACKGROUND

Automated systems are known for facilitating the lease of assets without requiring presence of a human vendor. Examples of such systems include cycle hire schemes in major cities around the world. According to some such schemes, a number of docking stations are provided throughout a city. Each of the docking stations includes a number of docking ports that are capable of receiving and securing bicycles associated with the scheme. At any one time, a number of the docking ports can be empty and thus available for receiving a bicycle. The remainder of the docking ports hold a secured bicycle, which may be released for use by a renter who successfully initiates a rental transaction.

In order to rent a bicycle using this type of scheme, a renter makes an initial payment at a docking station terminal using a payment card. The docking station terminal returns a paper slip including a printed release code and an indication of the docking port with which it should be used. The renter then keys in the bicycle release code into a button pad interface associated with that docking port. The docking port releases its secured bicycle for use by the renter.

When the bicycle is returned to a docking port, which may be different from the port that has released it or be at a different docking station, the payment card used to make the initial payment is charged with a total amount calculated in accordance with the terms of the scheme.

According to another type of scheme, the renter makes a card payment and selects a bicycle from a main docking station terminal before pressing an unlocking button at the appropriate docking port to unlock the selected bicycle.

One disadvantage of the above types of schemes is that the bicycle release process is time consuming and inconvenient for the renter. The initial payment card payment must be made at a first location (the initial docking station terminal); the renter must wait for the printed code to be provided at the docking station terminal or select an available bicycle; the renter must then enter the printed code to a second location (a docking port). As a single docking station terminal is associated with several docking ports, a bottleneck may form as a number of renters attempt to retrieve an access code from the same docking station. Furthermore, the minimum time required to initiate a rental transaction is limited by the requirement for a renter to have to interact with both a docking station terminal and a docking port.

A further disadvantage of the above systems is that the renter is required to use a payment card to perform the rental transaction. The payment card details are provided to the operator of the cycle scheme system. In the event of a security breach, a malicious third party could obtain the payment card details and use them to perform unauthorized transactions.

Another example of an automated system for facilitating the lease of assets without requiring presence of a human vendor is a car-sharing scheme. This scheme is also available in a number of major cities around the world. It enables its pre-registered members to reserve and rent vehicles. Vehicle reservations are billable by the hour or day and, in addition to the car reservation charges, members pay a monthly or annual membership fee.

Members are able to view vehicle availability and reserve a vehicle of interest via the Internet, a mobile application, or by calling in a call centre. Each member is provided with an access card that unlocks the vehicle that member has reserved, only at the time for which the member reserved the vehicle. Each vehicle on the scheme fleet has an RFID transponder that is able to communicate with the access card, and thus to control locking and unlocking of the vehicle. The vehicles record their positions, usage, and mileage and report such data to a central server using in-car technology.

Vehicle reservations may be charged when the member makes a reservation, at the end of the reservation, or at the end of a billing cycle, such as a month. Any additional charges, such as late fees and excess mileage fees, are calculated and added at the end of the reservation.

One disadvantage of this type of scheme is that to use the scheme one needs to be a registered member. Furthermore, to obtain a vehicle, the vehicle must be reserved in advance. Both are time consuming processes and do not allow for spontaneous leases.

A further disadvantage of the car-sharing system is that the renter is required to use a payment card to make the vehicle reservation. The payment card details are provided to the operator of the car-sharing scheme, online or by phone, and are stored with the operator. In the event of a security breach, a malicious third party could obtain the payment card details and use them to perform unauthorized transactions.

### SUMMARY

According to a first aspect of the present disclosure, there is provided a method, performed by an asset-leasing platform associated with a payment network, of automatically leasing assets registered with the asset-leasing platform, the method comprising: receiving a query, from a first mobile device, about a first asset registered with the asset-leasing platform, the query comprising a first asset identifier of the first asset; using the first asset identifier to retrieve a first token of the first asset and leasing data of the first asset from an asset database of the asset-leasing platform; transmitting the retrieved first token and leasing data toward the first mobile device; associating a first account identifier with the first token in the asset database, when a first person-to-person, "P2P", payment transaction concerning the first asset is pre-authorized with reference to the first account identifier of a customer of the first mobile device; and in response to a request received from a terminal of the first asset concerning the first account identifier, transmitting toward the terminal of the first asset a confirmation that the first account identifier is associated with the first token to cause release of the first asset in lease to the customer.

The above features provide a method in which an electronic device can advantageously identify an unattended asset to be leased, initiate a payment for a rental (lease) of the asset, and initiate the release of the asset, where the asset-leasing platform facilitates the back-end processing of the lease transaction. This method is advantageous in that it reduces bottlenecks in systems where a number of users would be required to access a shared payment terminal to input payment information for a plurality of asset rentals.

Another advantage of the method is that the identification of the asset, the payment of the asset and the release of the asset are integrated. This removes the requirement for intermediate steps to link these processes together and similarly removes the requirement for a technical infrastructure to provide intermediate steps. For example, the need to provide a docking station having means for issuing a printed code is removed. Further, the centralised approach by means of the asset-leasing platform and integration of the method with payment processing by a payment network advantageously enable processing of asset-leasing transactions and transfer of the asset data to consumers from the asset owners, without requiring the asset owners to develop bespoke systems for provision of such asset-leasing systems. The above approach not only reduces the resource burden on the owners, but also avoids compatibility issues between the asset owners and mobile applications for leasing assets, thereby enabling customers to use a single mobile application to lease assets from different types of asset owners, such as individual owners, small business, and large franchises.

The further advantage is that the assets can be leased on the spot, without having to make a reservation, thereby saving time and expense to the consumers and increasing efficiency of the lease process for the asset owners.

In some example embodiments, the method further comprises disassociating the first account identifier from the first token in the asset database by the asset-leasing platform to terminate the lease of the first asset, when a subsequent P2P payment transaction concerning the first asset is pre-authorized with reference to the first account identifier of the customer of the first mobile device,

In some example embodiments, where the first account identifier is associated with the first token in the asset database by the asset-leasing platform for a pre-defined renewal period and the first P2P transaction is pre-authorized for a periodic amount associated with the first asset, the method further comprises: upon expiration of a pre-determined portion of the renewal period, transmitting from the asset-leasing platform toward the first mobile device a warning that the lease of the first asset is due to expire and that a second P2P payment transaction for the periodic amount is required to renew the lease.

In some example embodiments, the method further comprises: renewing the lease for the pre-defined renewal period in response to the second P2P payment transaction for the periodic transaction amount being pre-authorized with reference to the first account identifier.

In some example embodiments, the method further comprises: receiving, by the asset-leasing platform, a query, from a second mobile device, about a second asset registered with the asset-leasing platform, the query comprising a second asset identifier of the second asset; using the second asset identifier to retrieve a second token and leasing data of the second asset from the asset database of the asset-leasing platform; transmitting the retrieved second token and leasing data toward the second mobile device; associating a second account identifier with the second token in the asset database by the asset-leasing platform, when a first P2P payment transaction concerning the second asset is pre-authorized with reference the second account identifier of a customer of the second mobile device; and in response to a request received from a terminal of the second asset concerning the second account identifier, transmitting toward the terminal of the second asset a confirmation that the second account identifier is associated with the second token to cause release of the second asset in lease to the customer of the second mobile device.

In some example embodiments, the method further comprises: disassociating the second account identifier from the second token in the asset database by the asset-leasing platform, and thereby terminating the lease of the second asset, when a subsequent P2P payment transaction concerning the second asset is pre-authorized with reference to the second account identifier of the customer of the second mobile device,

In some example embodiments, the first mobile device and the second mobile device are the same device and the second asset is different from the first asset.

In some example embodiments, the first token and the second token are both associated with the first account identifier in the asset database.

In some example embodiments, the second mobile device is different from the first mobile device and the first asset and the second asset are the same and wherein the second account identifier is associated with the second asset only after the first account identifier is disassociated from the first asset.

In some example embodiments, the first terminal is comprised within the first asset.

In some example embodiments, the method further comprises: receiving by the asset-leasing platform a query from an asset owner concerning one or more assets registered with the asset-leasing platform, the query comprising corresponding one or more asset tokens; using the one or more asset tokens to retrieve from the asset database by the asset-leasing platform a status of the one or more assets; and returning data concerning the status of the one or more assets to the asset owner.

According to a second aspect of the present disclosure, there is provided a method performed by a mobile device, of automatically leasing an asset to a customer of the mobile device, the method comprising: acquiring an asset identifier of the asset from the asset registered with an asset-leasing platform associated with a payment network, or from a terminal of the asset; transmitting, from the mobile device toward the asset-leasing platform, a query about the asset, the query generated by the mobile device using the asset identifier; receiving a response to the query from the asset-leasing platform, the response comprising leasing data of the asset and a token of the asset; generating a first authorization request for a person-to-person, "P2P", payment transaction and transmitting the first authorization request toward the payment network, the first authorization request comprising an account identifier associated with the customer as a sender identifier, the token as a recipient identifier, and a transaction amount indicated by the leasing data of the asset; and after receiving at the mobile device an authorization response approving the P2P payment transaction, providing, by the mobile device to the asset or the asset terminal, the sender identifier to cause release of the asset in lease to the customer.

Advantages described above with reference to the first aspect are similarly provided by the method according to the second aspect.

In some example embodiments, the method further comprises: to return the asset and terminate the lease, generating by the mobile device a second authorization request for a second P2P payment transaction and transmitting the second authorization request toward the payment network, the second authorization request comprising the account identifier associated with the customer as a sender identifier and the token as a recipient identifier; and receiving at the mobile device an authorization response approving the second P2P payment transaction, thereby indicating that the lease of the asset by the customer of the mobile device has been terminated.

According to a third aspect of the present disclosure, there is provided an asset-leasing system comprising: an asset-leasing platform implemented in one or more servers comprising at least one processor and a memory storing instructions, which when executed by the at least one processor cause the asset-leasing platform to execute any of the methods described above with reference to the first aspect of the present disclosure; and an asset database for storing asset data about assets registered with the asset-leasing platform, the asset data comprising: asset identifiers and tokens; associations between the assets identifiers, the tokens, and the account identifiers; and leasing data describing availability and costs of the registered assets.

Advantages described above with reference to the first aspect are similarly provided by the method according to the second aspect.

In some example embodiments, the asset-leasing system further comprises: a payment network associated with the asset-leasing platform and configured to process authorization requests concerning P2P payment transactions received with reference to the assets registered with the asset-leasing platform.

### BRIEF DESCRIPTION OF FIGURES

Embodiments of the present disclosure will now be described, by way of nonlimiting example only, with reference to the accompanying drawings, in which:
Figure 1 is a schematic diagram of an example system for provisioning a token for a given asset and payment account number;
Figure 2 is a schematic diagram of an example system and steps for automatically processing a lease transaction in relation to an unattended asset;
Figure 3 is a schematic diagram of an example system and steps for automatically processing return of a leased asset;
Figure 4 is a schematic diagram of an example method of automatically leasing assets as performed by an asset-leasing platform;
Figure 5 is a schematic diagram of an example method of automatically leasing assets as performed by mobile device; and
Figure 6 is a schematic diagram of an example mobile device suitable to perform methods described herein.

### DETAILED DESCRIPTION

Systems and methods for automated leasing of unattended assets registered with an asset-leasing platform associated with a payment network are described herein. The disclosed systems and methods provide for a centralised approach that enables different, non-related asset owners to lease their unattended assets to interested consumers on the spot, without requiring such asset owners to implement be-spoke systems. As described hereinafter, personal and financial data of the consumers and asset owners needed to process lease transactions is safeguarded and the consumers are provided with convenient, efficient, and easy to use means to lease an unattended asset on the spot that do not require the consumers to contact the asset owner, but rather allow the use to complete the lease transaction using a mobile device, such as a smart phone.

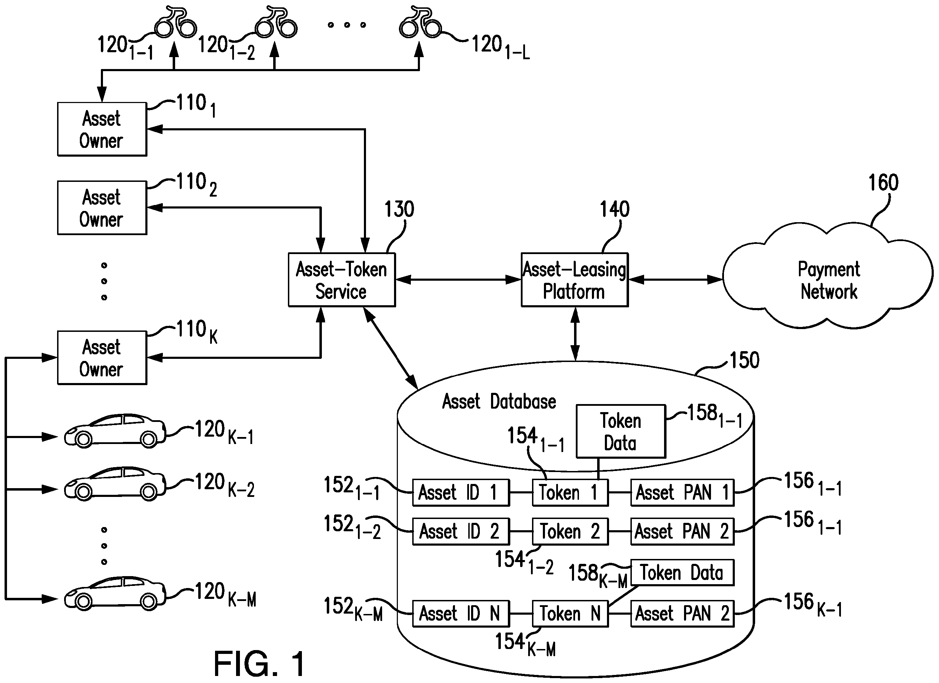

Example systems and methods providing the above and other advantages are described below with reference to Figures 1 to 6. Figure 1 shows a system for provisioning a token (may also be referred as a token PAN or a token ID) for a given asset and payment account number (PAN) as well as a schematic representation of the relationship between the token, an asset identifier (asset ID) of the asset, and the PAN associated with a payment account belonging to an owner of the asset.

In particular, Figure 1 shows asset owners 110₁, 110₂, ... 110_{K}, each having a number of assets, i.e., assets 120₁₋₁ to 120_{1-L} and 120_{K-1} to 120_{K-M} respectively. The asset owner can be a vendor or an individual. The asset owner is registered with an asset-leasing platform 140. Although shown as a separate entity, in some embodiments, the asset-leasing platform 140 is an add-on service provided by a payment network 160, and as such relies on and forms a part of the payment network's infrastructure.

An asset-token service 130 is designed to assign tokens, such as tokens 154₁₋₁ to 154_{L-N}, to the assets, such as the assets 120₁₋₁ to 120_{1-L} and 120_{K-1} to 120_{K-M}, (to tokenize them) and share such tokens with the asset-leasing platform 130. To generate a token for a particular asset (e.g., the vehicle 120_{K-M}), the asset token service 130 uses a PAN (e.g., the PAN 156_{K-1}) designated by the asset's owner for receiving funds for rental of the asset and an asset ID of the asset (e.g., the vehicle's asset ID 152_{K-M}). Once the token (e.g., the token 154_{K-M}) has been generated, the asset-token service 130 links the asset ID and the PAN to the token. For example, in the arrangement of Figure 1, details of the PAN 156, the token 154, and the asset identifier 152 are stored in an asset database 150. The token 154 can also be returned to the asset owner 110.

As shown in Figure 1, the asset database 150 is also accessible by the asset-leasing platform 140. However, the asset-leasing platform 140 may employ a separate dedicated database. In this arrangement, the asset-token service 130 also provides data concerning the token assigned to the asset to the asset-leasing platform 140.

The term 'database' used herein is not limited to a particular type of database, but rather is intended to encompass any storage solution that allows storage and retrieval of data and to define relationships between stored data entities.

The asset ID may take a number of forms. For example, the asset ID may be an identifier in the Internet of Things from the asset's embedded computer system or a unique identifier for the class of asset, such as a registration plate number or a vehicle identification number (VIN) for a vehicle.

In some embodiments, a Mastercard tokenize asset API is used to provide a PAN (e.g., the PAN 156_{K-1}) linked to a payment account of the asset owner and an asset ID (e.g., the asset ID 152_{K-1}) linked to the asset 120_{K-1} to the asset-token service 130 from the asset owner (e.g., the asset owner 110_{K}):
*tokenizeAsset()*
*In: Asset Identifier, Funding PAN*
*Out: Token PAN*

In some example embodiments, this API call is invoked during registration of the asset with the asset-leasing platform 140 to create the token-PAN relationship in the asset database 150. The same token can be used in connection with all transactions, or a certain type of transactions, involving the same asset. In some embodiments, however, a new token is assigned to the asset for each transaction, such as a lease transaction involving the asset.

In Figure 1, the asset-token service 130 and the asset-leasing platform 140 are shown as separate entities that have access to the same token database 150. However, the asset-token service 130 may be run by or form part of the asset-leasing platform 140. The asset-leasing platform 140 in turn may be run by the payment network 160 or on behalf of the payment network by a third party, or form part of the payment network.

The asset owner 110 communicates details of the PAN 156 and the asset identifier 152 to the asset-token service 130 directly, or via a broker (not shown) who then forwards the details to the asset-token service 130. In some embodiments, the asset owner 110 inputs the PAN 156 and the asset ID 152 into a computing device via a customer interface of a web browser. The web browser then communicates the PAN 156 and the asset identifier 152 either to the asset-token service 130, or to the broker who forwards the PAN 156 and the asset identifier 152 to the asset-token service 130.

In some example embodiments, the asset itself is configured to provide the asset ID to the asset-token service 130, for example using the tokenize asset API, as discussed above. Yet, in some example embodiments, the asset ID is instead or also embedded in an electronically readable device associated with the asset, e.g., in a QR code or an RFID tag attached to the asset, and thus can be provided to the asset-token service 130 by a reader, once scanned.

In some example embodiments, before generating a token 154, the asset-leasing platform ensures that at least:
- the asset ID is valid; and/or
- the asset is owned by the owner of the PAN; and/or
- the PAN that is linked to the token provisioned on the asset is indeed associated with the owner of the asset.

The asset database 150 shows a schematic representation of the relationship between the tokens 154, asset IDs 152, and the PANs 156 associated with an assets 120 belonging to the asset owners 110. Any single token 154 is linked with a single asset ID 152 and a single PAN 156. Since a single owner may have multiple assets, the same PAN 156 can be linked to more than one asset ID and token. For example, in Figure 1, PAN 156₁₋₁ is linked to at least two token - asset ID pairs, i.e., token 154₁₋₁ and asset ID 152₁₋₁ and token 154₁₋₂ and asset ID 152₁₋₂. In this scenario, the asset database 150 may include separate records for each relationship, as shown in Figure 1, or link a number of token-asset ID pairs to the same PAN (not shown).

As described below in greater detail, a token associated with a certain asset is used for allocating payments made to or on behalf of the PAN in relation to the asset. No knowledge of the actual PAN is required to make payments to the asset owner. For example, by using the token to identify a recipient of a person-to-person payment, e.g., submitted via Mastercard MoneySend®, the sender ensures that the payment will arrive at the account identified by the PAN of the sender. The payment network, after receiving an authorization request for a person-to-person payment (P2P) transaction including a token instead of a PAN, uses the token data to determine the correct recipient, i.e., the real PAN.

As discussed above, a given PAN can be linked to a number of assets, and thus asset IDs. In this way, an owner of a number of assets is able to receive payments on a number of assets into a single payment account, with payments relating to different assets being made to different tokens. From the perspective of the renter, the payments are being made to the different assets. It is only when the payment request is received by the payment network provider that the payments are redirected towards the payment accounts belonging to the asset owners.

The token can therefore be made public and used, as described below, during lease transactions involving the asset and the PAN, without the payment account PAN being made public.

In addition to the PAN - token - asset ID relations, the asset database 150 also stores data related to the assets, such as their availability, pricing, and/or any other information received from the asset owner for example for sharing with customers, as well as details of any past transactions involving the assets. Such data is stored in the asset database 150 with reference to the corresponding token 154 and/or asset ID 152 and referred herein as token data.

For example, with reference to the token data 158_{K-M}, the token data may include per-day cost to lease the vehicle 120_{K-M}, when the vehicle is not available for lease, details of some or all past transactions performed using the token 154_{K-M}, such as lease of the vehicle 120_{K-M}. The token data 156_{K-M} may be updated by the asset owner 110_{K} (for example, using a designated application enabling the asset owner to access the token data at the asset database 150) to record expenditure, such as maintenance costs, on the asset.

The token 154_{K-M} can also be used to make payments from the PAN 156_{K-M} associated with the token 156_{K-M}. In some embodiments, such outgoing transactions can also be recorded as the token data 156_{K-M}. An advantage of building a record of incoming and outgoing expenditure associated with the asset is that the owner can generate an accurate account of the performance of the asset in lease.

Further, as discussed below in greater detail, the token data can be used as criteria based on which the payment network 160 determines whether to complete or deny a proposed lease transaction. For example, if the token data indicates that the asset is unavailable for a period desired by the customer, the payment network will deny the lease transaction.

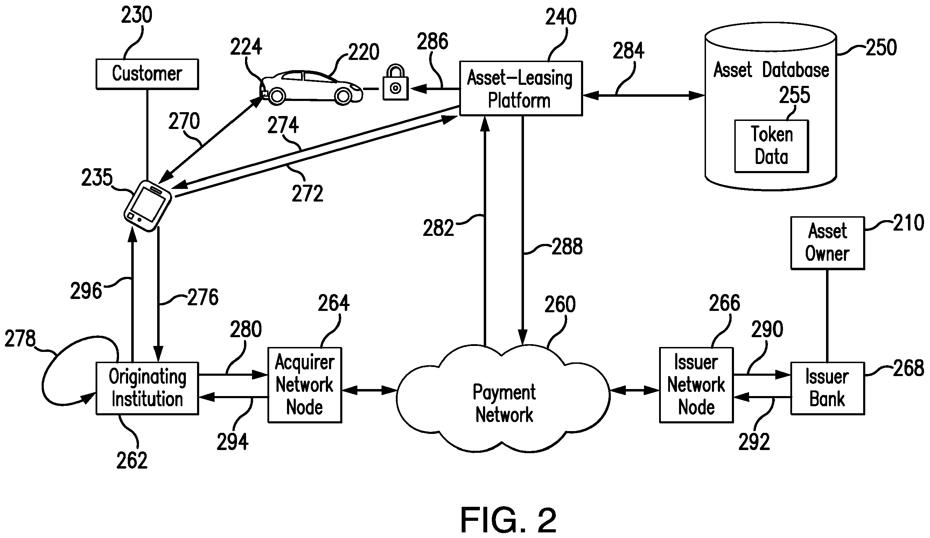

Figure 2 shows a system and steps of processing a lease transaction in relation to an asset 220 registered with an asset-leasing platform 240 by an asset owner 210 when a customer 230 wishes to lease the asset.

The customer (renter/user) 230 finds the leasable asset 220, such as a vehicle. The asset is however unattended - there is no human vendor - and is secured to prevent its unauthorized removal. The asset can be secured at or in a docking station housing the asset (e.g., a dock holding or securing a bicycle for hire) or self-locked (e.g., a locked vehicle).

In the context of a docking station holding multiple assets, the lock forms part of a larger locking station. The locking station comprises a receiving portion in which a portion of the asset, such as a bicycle, may be placed. When the lock is closed, a bicycle in the receiving portion is secured and cannot be removed by a renter without the lock being opened. The lock may be a solenoid lock or another type of lock suitable for automatic operation.

The asset 220 comprises an identification tag 224 which is encoded with data allowing the asset 220 to be identified - an asset ID. Examples of the identification tag 224 include, but are not limited to, are an RFID (Radio Frequency Identification) tag, a near field communication (NFC) chip, or a quick response (QR) code.

The identification tag 224 can be located on or embedded in the asset, e.g., a saddle or handlebars of a bicycle, exterior surface of a vehicle, inside the vehicle behind the windshield, or any other location accessible directly or wirelessly (e.g. Bluetooth, RFID, NFC, or the like).

The asset 220 may also include a terminal (not shown) operable to control the lock for securing or releasing the asset 220. The terminal comprises a processor and at least one communication node that allow the terminal to communicate wirelessly with the mobile device 235 and control locking/unlocking of the asset. For example, if the asset 220 is a vehicle, the terminal can control the power lock of the vehicle to lock or unlock the vehicle, such as using in-car technology. The communication node may be, for example, an internet connection or any other suitable means for sharing information wirelessly. The processor may be part of a lightweight computing unit, such as a RasberryPi^{™}, or another form of networked microcontroller.

Depending on the type of the asset, the lock and terminal for controlling the lock can be external to the asset, for example, a lock of a docking station for securing a bicycle at the docking station, where the terminal forms part of the docking station. Notwithstanding whether the terminal and/or lock are external or internal to the asset, the terminal is operable to communicate wirelessly with mobile device and to control the lock to secure or release the asset responsive to such communications.

The customer 230 has a mobile device 235 that is equipped with means to communicate with the asset's terminal (e.g., a transceiver) and means to obtain the asset ID from the asset 220 (e.g., an RFID reader, an NFC reader, or a scanner). The mobile device 235 is further equipped to make and receive person-to-person (P2P) payments. This may be done by using, for example, the Mastercard MoneySend® system. Such systems allow a customer to link a mobile device with a payment card in order to make and receive payments.

In one example of such a system, the Mastercard Digital Enablement Service (MDES) is used to make payments using a mobile device linked with a Mastercard payment card. The Mastercard payment card is linked to a mobile device by the provision of a payment token. When a payment is made from the mobile device, the payment token is provided in order to identify the payment account from which funds are to be withdrawn. During the validation of the transaction, the MDES maps the payment token onto the PAN of the payment card with which the mobile device is linked. As the payment token that is used to perform the transaction is only converted into a payment card PAN at the MDES, the payment token can be locked for use in a single channel. For example, the MDES may only be authorized to allow payment transactions from the payment token to a given recipient, thus reducing the possibility of the payment token being used fraudulently by a third party.

It is it be understood that this description of the mobile device being linked with a Mastercard payment card using the MDES is illustrative, and that other payment tokenization systems using payment cards of different brands may be used in accordance with examples of the present disclosure. Furthermore, although the payment token is typically converted to a payment card PAN, it is to be understood that the mobile device may provide the payment card PAN directly during payment transactions.

In some example embodiments, acquisition of the asset ID is controlled through a designated mobile application running on the mobile device 235. The designated mobile application also enables the P2P functionality of the mobile device.

In general, the customer or renter 230 uses his or her mobile device 235 to scan, read, or otherwise obtain (step 270) the asset ID of the asset 220 from the asset 220 and submit a request (step 272) for the information about the asset 220 with reference to the asset ID to the asset-leasing platform 240.

As discussed herein, the identification code can, for example, be encoded in an NFC tag attached to or comprised in the asset 220 and retrieved using NFC reading technology in the mobile device 235. The skilled reader will understand, however, that the identification code could be encoded in another suitable form, such as a QR code or any suitable optical or audible coding schema, and that the mobile device 235 may retrieve the identification code using another suitable means, such as an optical code reader, typically comprising a camera to capture the code and an app or other software to process the captured image. In the case of an audible coding schema a microphone can be used to capture an audio sequence which is then processed using an app or other software.

To retrieve the identification code, the customer 230 positions the mobile device 235 in the vicinity of a region of the asset 220 containing the NFC tag 224, which may for example be indicated visually or haptically. If the asset ID is embedded in a QR tag (label) attached to the asset 220, the mobile device scans the QR tag via the mobile application to read the QR code, and thus to obtain the asset ID of the asset.

In some embodiments, the asset 220 and/or its terminal are Bluetooth enabled. Once paired with the mobile device 235, the asset 220, or its terminal 224, shares the asset ID embedded in the identification tag 224 with the mobile device 235.

After obtaining the asset ID, the mobile device 235 sends a query (step 272) to the asset-leasing platform (e.g., makes an API call) to obtain leasing data of the asset 220, such as its pricing or availability. Using the asset ID, the asset-leasing platform 240 retrieves respective token data from the asset database 250. The query from the mobile device 235 may specify the data requested, and, if specified, only selected token data responsive to the query is returned (step 274) to the mobile device 235 as the leasing data. If the query is silent as to what data is requested, all respective token data will be returned (step 274) to the mobile device 235 as the leasing data.

The token linked to the asset 220 is also obtained in response to the query and provided (step 274) to the mobile device 235 along with the leasing data.

If the customer 230 requests the lease by confirming the lease conditions as defined in the mobile application by the leasing data or by entering new lease conditions (e.g., a different duration of the lease), the mobile device 235 initiates a P2P payment transaction, for example using the Mastercard MoneySend® protocol. In particular, the mobile device 235 generates and transmits (step 276) a P2P authorization request toward the payment network 260 via a conventional payment processing route, i.e., to a customer's originating institution 262. The authorization request comprises a number of fields, including the customer PAN (a real PAN or a token PAN) of the customer 230 as a sender identifier, the asset token of the asset 220 as a recipient identifier, and a transaction amount determined based on the leasing data of the asset 220 in accordance with the lease conditions selected by the customer 230. Additional data, such as dates of the lease and a currency code can be included in the fields of the authorization request as well.

If the originating institution 262 determines (step 278) that the customer's account has sufficient funds to transfer the specified transaction amount, the originating institution 220 sends (step 280) an authorization credit request (such as an ISO8583 authorization credit or another such transaction request) based on the data from the authorization request transmitted by the mobile device, to an acquirer network node 264 (or other suitable communication node) of the payment card network 260.

Upon receiving the authorization credit request, the acquirer network node 264 extracts the recipient identifier - the asset token (which in some embodiments corresponds to DE2 of the ISO8583 Authorization Credit) - and determines whether the recipient identifier is associated with an authorization value added service, such as the asset-leasing added service implemented using Mastercard InControl^{™}. In some example embodiments, the leading 6 or 8 digits of the recipient identifier are indicative of whether the recipient identifier is associated with the asset-leasing added service. For example, if the first 6 digits of 500000 indicate that the recipient identifier is associated with the asset-leasing added service, whereas any other first 6 digits indicate it is not, a recipient identifier in the range 5000000000000000-50000099999999999 would be determined to be associated with the asset-leasing added service, whereas a recipient identifier for example in the range of 5000010000000000-50000199999999999 would not be. In this manner, the acquirer network node 264 is able to identify, based on the extracted recipient identifier, whether the token asset provided as a recipient identifier is associated with the asset-leasing added service.

If the recipient identifier is associated with the asset-leasing added service, the authorization process of the P2P payment transaction takes a detour (step 282) through the asset-leasing platform 240.

The primary purpose for this detour is for the asset-leasing platform to associate (step 284) the asset token and the customer PAN in the asset database 150, and thereby to enable release of the respective asset in lease to the customer 230. Once such an association has been established in the asset database, the asset-leasing platform is able to confirm (step 286) to the asset and/or its terminal that the payment for the lease has been confirmed and that the corresponding asset 220 can be unlocked and released to the customer 230 upon presentation or submission of the customer PAN.

However, the asset-leasing platform 240 may also set a number of controls for determining whether an authorization credit request can be approved for forwarding it to an issuer bank 268 of the asset owner 210 or declined. In the event that the authorization credit request is denied, no association between the asset token and the customer PAN will be created in the asset database 250.

To determine whether the authorization credit request is to be approved for forwarding or denied, the asset-leasing platform compares the data in the authorization credit request to the token data 255 with reference to the corresponding asset according to predetermined criteria. For example, the asset-leasing platform will decline the credit authorization request if the asset is unavailable for any portion of the period in which the renter has attempted to book the asset. The asset-leasing platform may also decline the credit authorization request if the transaction amount is below a minimum specified amount required for the leasing of that particular asset.

In the event that the credit authorization request is declined, the payment network 260 will return an authorization credit decline response to the originating institution 262 of the customer 230 via the acquirer network node 264.

If the asset-leasing platform determines that the credit authorization request meets the requirements of the controls placed on the asset token (for example, the asset being available and the payment being sufficient for the rental), the token data 255 is updated to indicate that the asset is now booked by associating the asset token with the customer PAN (step 284). The token data 255 can also be updated to include further details of the lease transaction, such as the amount of the payment involved, the identity of the renter (customer), insurance information, and information relating to the owner or renter of the asset (e.g. driving licence information when renting a car or legal documents relating to the usage of the asset if required by law).

Thus, once the P2P transaction is pre-authorized by the asset-leasing platform and the payment network overall, the credit authorization request is sent (step 290) from an issuer network node 266 (or other suitable communication node) of the payment network 260 to the issuer bank 268 of the customer PAN. Once a successful authorization response is returned (step 292) by the issuer bank 268 to the issuer network node 266 of the payment network 260, the payment network 260 sends (step 294) an authorization approval response from the acquirer network node 264 to the originating institution 262.

The originating institution returns (step 296) the authorization approval response to the mobile device 235, which displays a corresponding message to the customer 230 indicting that the lease transaction has been approved.

To unlock the asset, the customer provides the customer PAN (token or real) to the asset 220 or its terminal, for example using the NFC capability of the mobile device or by entering the PAN using a keypad of the terminal. The asset 220 or its terminal confirms (step 286) with the asset-leasing platform 240 that the customer PAN is assigned to the asset token, for example by making an API call to the asset-leasing platform 240. Once confirmed, the asset 220 can be unlocked and released to the customer 230.

For example, a key to the vehicle 220 may be locked inside the vehicle. In response to the asset-leasing platform 240 confirming that the customer PAN is associated with the asset token, the vehicle 220 unlocks its doors, enabling the customer 230 to obtain a key and start using the vehicle. If the confirmation is provided to the terminal, then the terminal may issue a command to the vehicle 220 to unlock the doors.

In some example embodiments, the terminal forms a part of a docking station hosting the asset 220. In such a scenario, the terminal sends an unlock command to the docking station causing it to release the asset 220.

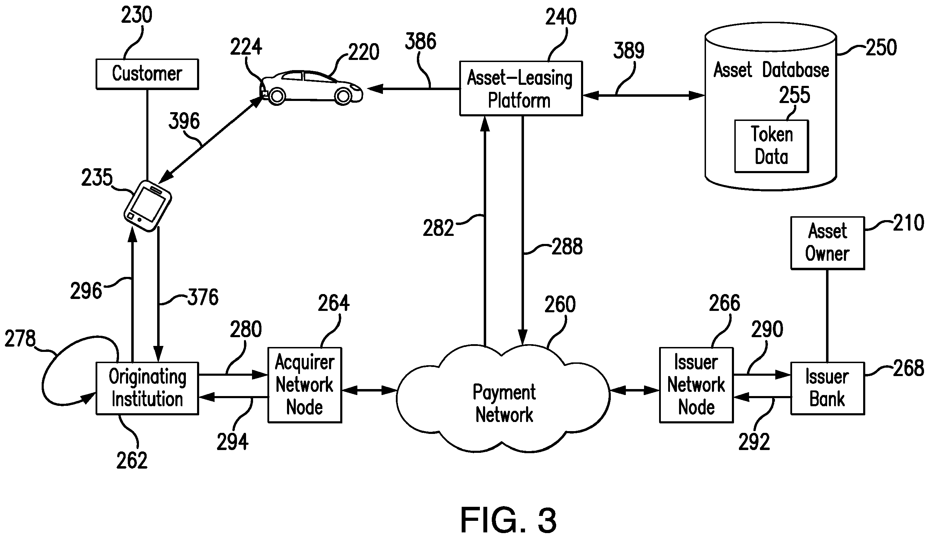

Figure 3 shows a system and steps for processing a lease transaction in relation to the asset 220 when the customer 230 decides to return the asset and terminate the lease. The system of Figure 3 is substantially the same as the system described with reference Figure 2, and thus the same entities are denoted using the same reference numbers in both figures. Similarly, those steps that are substantially the same as described with reference to Figure 2 are denoted using the same reference numbers in Figure 3. Those steps that differ are denoted using different reference numbers. To avoid repetition, only those features and steps of the system depicted in Figure 3 that differ from the features and steps of the system of Figure 2 are discussed with reference to Figure 3.

When the customer 230 wishes to return the asset 220, he or she bring the asset to a designated area and indicates using the mobile application that he or she is ready to return the asset 220. The designated area may be different from the area from where the asset 220 was leased.

The mobile device 235 generates and transmits (step 376) another P2P authorization request toward the payment network 260 via the conventional payment processing route, i.e., to a customer's originating institution 262. This authorization request also comprises a number of fields, including the customer PAN (real or token PAN) of the customer 230 as a sender identifier, the asset token of the asset 220 as a recipient identifier, an updated transaction amount, and a request to reverse the original authorization that enabled the lease. The authorization request may also include a calendar entry indicating a time and date of the asset return as well as a currency code and other information that may be needed to process the P2P payment. The updated transaction amount is determined by the mobile device 235 based on the leasing data of the asset 220 as well as the time and date of the asset return.

Once a respective authorization credit request reaches the asset-leasing platform 240, the asset-leasing platform 240 updates the asset database 250 to indicate that the lease has been terminated (finished) by disassociating (step 384) the customer PAN from the asset token. As mentioned above, data concerning the lease transaction can nonetheless be saved as the token data of the asset to enable the asset owner 210 to access such data at a later time.

Once the customer PAN has been disassociated from the asset token, the asset-leasing platform 240 can also send a message (step 386) to the asset 220 or the associated terminal to lock the asset 240. If the terminal is not incorporated within the asset, e.g., located at a docking station, the asset-leasing platform is able to determine that particular terminal, for example, using the GPS positioning of the asset 220.

In some example embodiment, the mobile device 235 of the customer 230, instead of or in addition to the asset-leasing platform informs (step 396) the asset 220 or the associated terminal that the lease has been terminated and the asset 220 needs to be locked. For example, once the mobile device 235 receives (step 296) an authorization approval response for the updated amount from the originating institution, the mobile communicates with the asset 220 or its terminal to advise the asset 220 that it needs to be locked. Alternatively, the customer may need once again to enter his or her customer PAN in the key pad of the terminal to lock the asset 220.

As described above with reference to Figures 2 and 3, the lease transaction is for a single lease period which finishes once the customer returns the asset. In some example embodiments, however, the systems of Figures 2 and 3 use a renewable lease period instead. A renewable (repeatable) lease period is particularly useful in the context of a long-term lease or when the customer is not sure at the time of leasing the asset for how long the asset will be required.

To accommodate for the renewable lease period, the systems of Figures 2 and 3 are slightly modified. In particular, the original authorization request, such as the request submitted by the mobile device at step 276 (Figure 2) is for a transaction amount covering the renewable period of the lease. The period can be defined in the terms of time, e.g., in hours, days, etc., in the terms of distance, e.g., 10 kilometres, 100 kilometres, etc., in the terms of number of the uses the leased asset is used, and so on.

The lease is then monitored by the mobile device though the mobile application, as well as by the asset-leasing platform for expiration of the renewable period. Once the renewal period is close to expiration (e.g., 1 hour before its expiration), the customer is provided with the warning that the lease is about to expire and another authorization is required to renew the lease. The customer may elect to return the asset before the lease expires, or confirm another P2P payment. In the event of the latter, such a P2P payment is processed in the same manner as the P2P payment used to initiate the lease transaction.

With a renewable period, the customer will typically be charged for the renewal period in advance. Therefore, when the customer is ready to return an asset, the authorization request indicating return of the asset does not need to include a request to reverse the original authorization. Rather, such an authorization request would include a transaction amount for any outstanding chargers. Since the transaction amount is not the periodic amount (as for example determined by the amount itself and/or a flag in a designated field of the authorization request) the asset-leasing platform is being signalled that the asset is being returned, and thus the customer PAN needs to be disassociated from the asset token.

If the renewal period is distance or usage based, both the mobile device and asset-leasing platform 240 may remain in periodic communication with the asset to ensure accurate tracking of the renewal period.

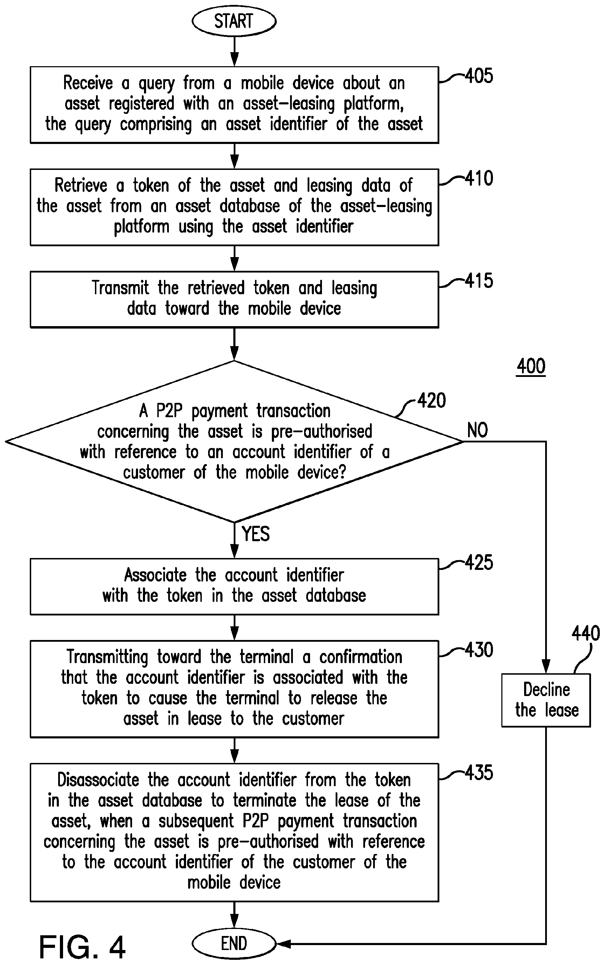

Figure 4 depicts a method 400 of automatically leasing assets registered with an asset-leasing platform associated with a payment network. The method is described with reference to and is executed by the asset-leasing platform, and is particularly suitable to enable lease of unattended assets.

At step 405, the asset-leasing platform receives a query from a mobile device about an asset registered with the asset-leasing platform. The query comprises an asset identifier of the first asset.

Using the asset identifier, the asset-leasing platform retrieves, at step 410, a token of the asset and leasing data of the asset from an asset database of the asset-leasing platform. As described above, the leasing data can include pricing and availability of the asset as well as other additional information, such as information provided by the asset owner, reviews, and any other information that can be useful for the consumer (user) to determine whether to proceed forward with the lease transaction.

At step 415, the asset-leasing platform transmits the retrieved data, including the token of the asset and associated leasing data toward the mobile device as a response to the mobile device's query.

If at step 420, the asset-leasing platform pre-authorizes a first P2P payment transaction concerning the asset with reference to an account identifier (e.g., a PAN) of the customer of the mobile device, the method proceeds to step 425; otherwise the lease is declined (step 430) and a respective message is transmitted toward the mobile device. As discussed in greater detail with reference to Figure 2, the authorization process includes the originating institution of the customer confirming that the customer has sufficient funds to cover the lease transaction, where the asset-leasing platform evaluates the P2P transaction, after the originating institution, in accordance with the additional control criteria, such as availability of the asset.

At step 425, the asset-leasing platform associates the account identifier with the token of the asset in the asset database. In this manner, the asset is tied to the customer for the duration of the lease.

At step 430, the asset-leasing platform transmits toward a terminal of the asset a confirmation that the account identifier is associated with the token to cause release of the asset in lease to the customer. In preferred embodiments, such transmission is executed in response to receiving a request from the terminal of the asset concerning the account identifier. The request would have been generated responsive to the customer using the mobile device to present customer's account identifier (such as a real or token PAN) to the terminal. However, in some embodiments, such a confirmation is transmitted as soon as the account identifier becomes associated with the token of the asset in the asset database.

At step 435, the asset-leasing platform disassociates the account identifier from the token in the asset database. This step is executed to terminate the lease of the asset when the customer returns the asset. The return of the asset is signalled to the asset-leasing platform by the mobile device initiating a subsequent P2P payment transaction concerning the asset with reference to the account identifier of the customer of the mobile device.

In some example embodiments, the lease is renewable without requiring the customer to return the asset. In such embodiments, the first P2P transaction is for a periodic amount associated with the asset. Further, at step 425, the asset-leasing platform associates the account identifier with the token in the asset database for a pre-defined renewal period. The method then includes a step transmitting from the asset-leasing platform toward the first mobile device a warning that the lease of the asset is due to expire and that a second P2P payment transaction for the periodic amount is required to renew the lease upon expiration of a pre-determined portion of the renewal period. If the mobile device initiates such a second P2P payment transaction for the periodic transaction amount and the asset-leasing platform pre-authorizes the transaction with reference to the account identifier, the method further includes a step of renewing the lease for the renewal period by the asset-leasing platform.

The above described steps 405 to 435 are repeated when a different asset registered with the asset-leasing platform is leased by the same or different customer, the same asset is leased by a different customer, or the same asset is leased by the same customer at a different time.

The assets may have their terminals comprised within or be external to the respective asset, for example, be associated with a docking station housing the asset.

As discussed with reference to Figures 2 and 3, the asset database gathers data regarding the registered assets, including their lease history and geographical positioning, such as GPS data. For privacy reasons, the GPS data may not be collected while the asset is in lease unless the customer has signed a respective statement allowing collection of such data. In some embodiments, the collected data is made available to the asset owner.

Therefore, the asset-leasing platform can receive a query from an asset owner concerning one or more assets registered with the asset-leasing platform. The query identifies the assets of interest by their associated tokens or asset IDs. Using such identification data, the asset-leasing database is able to retrieve a status of the one or more assets of interest from the asset database and return the retrieved data, including data concerning the status of the assets of interest to the asset owner.

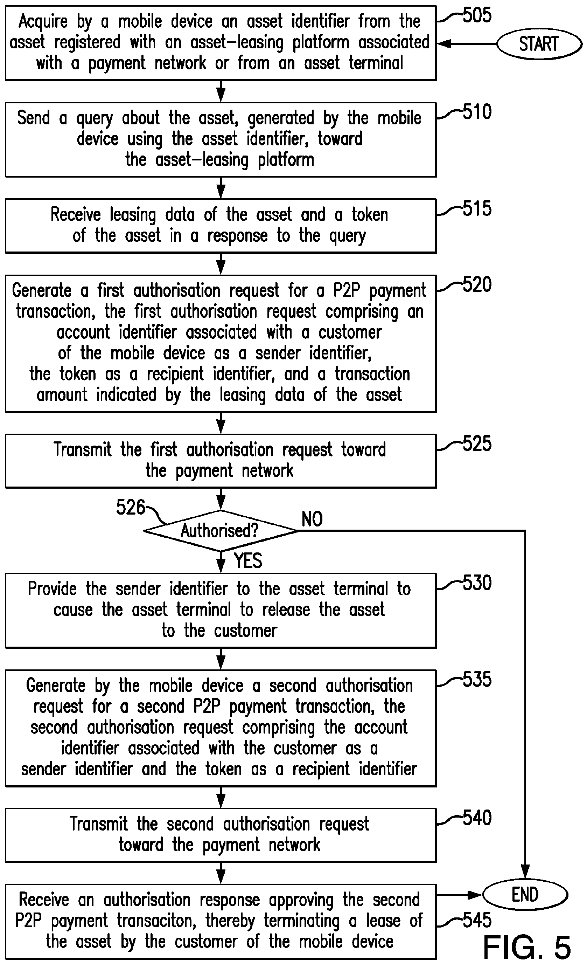

Figure 5 depicts a method 500 of automatically leasing assets registered with an asset-leasing platform associated with a payment network. The method is described with reference to and is executed by a mobile device of a customer leasing an asset, and is particularly suitable to enable lease of unattended assets.

At step 505, the mobile device acquires an asset ID of the asset from the asset registered with an asset-leasing platform associated with a payment network or from a terminal of the asset. As discussed with reference to Figures 2 and 3, the asset ID can be embedded in a tag located on or in the asset, such as an RFID tag, NFC chip, or a QR label. The mobile device includes a reader or scanner that is operable to obtain the asset ID from such a tag.

At step 510, the mobile device generates a query about the asset using the asset ID and sends the query toward the asset-leasing platform. The purpose of the query is to obtain a token associated with the asset ID in order to be able to initiate a P2P transaction for the lease of the asset with the owner of the asset as a recipient.

At step 515, the mobile device receives a response to the query which includes leasing data of the asset, as well as the token of the asset. As discussed above in detail, the leasing data includes information that is necessary for the customer to determine whether he or she would lease the asset and for what period. As such, the leasing data can include pricing and availability of the asset.

At step 520, the mobile device generates a first authorization request for a P2P payment transaction. The first authorization request contains at least an account identifier, such as a PAN, associated with the customer as a sender identifier, the token of the asset as a recipient identifier, and a transaction amount determined based of the leasing data of the asset. The mobile device transmits the first authorization request toward the payment network at step 525.

If this request is authorized - the mobile device receives an authorization response approving the P2P payment transaction (step 525) - the mobile device provides the sender identifier to the terminal of the asset to cause release of the asset to the customer in lease (step 530). If the request is not authorized, the asset remains secured/locked and the method 500 ends.

When the customer is ready to terminate the lease, the customer returns the asset to the same or different location and, at step 535, the mobile device generates a second authorization request for a second P2P payment transaction. Similar to the first authorization request, the second authorization request contains at least the account identifier associated with the customer as a sender identifier, the token of the asset as a recipient identifier. The request may also include an updated transaction amount determined based of the leasing data of the asset and the actual length of the lease.

The request is transmitted toward the payment network at step 540 and is designed to indicate to the asset-leasing platform that the asset has been returned and the lease is terminated. In some embodiments, the request also includes an indication (e.g., a flag) that the first P2P transaction is to be reversed and the second P2P transaction for the updated transaction amount is the final P2P transaction in connection with the lease.

Once the mobile device receives an authorization response approving the second P2P payment transaction (step 545), the lease of the asset by the customer of the mobile device has been terminated.

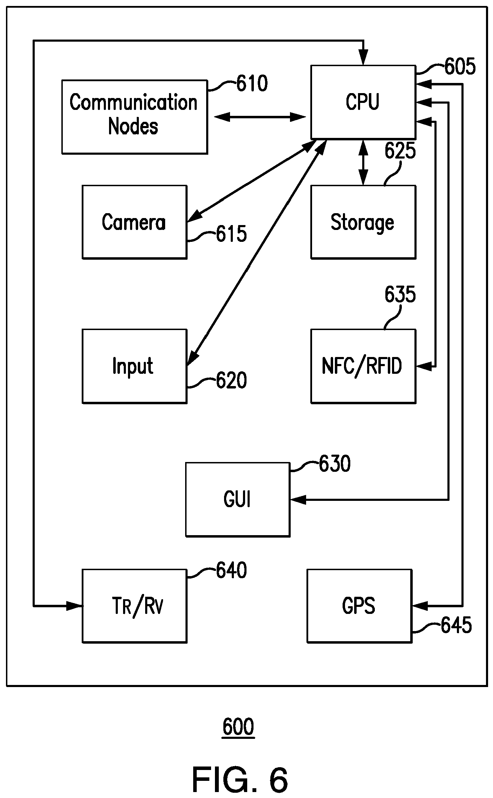

Figure 6 shows a schematic representation of an example of a mobile device 600 suitable for performing the steps of the methods described herein, such as with reference to Figures 2, 3, and 5. The mobile electronic device 600 may for example be a smart phone, tablet or another device capable of cellular or wireless communication (e.g., via Wi-Fi, GPRS, 3G or other protocols).

The mobile device 600 may be conventional in its hardware aspects but may be controlled by software to cause it to operate in accordance with aspects of the present invention. As described above, the mobile device 600 may have a dedicated mobile application installed thereon for enabling automated lease transactions of unattended, secured assets.

The mobile device 600 includes a computer processor 605 operatively coupled to a number of communication nodes 610 and a storage device 625. The communication nodes 610 may include wireless network connection nodes.

The mobile device 600 also includes NFC and/or RFID enabling hardware 635 and transceiver(s) 640. These hardware components can for example be used to communicate with the assets and their terminals to obtain asset IDs and provide PANs. The mobile device 600 further includes a camera 615, which can be used to provide the input for a QR reader or a scanner. The mobile device 600 also includes location determining hardware 645, such a GPS system.

As shown in Figure 6, the mobile device 600 includes inputs 620, such as a keyboard, input interface, microphone, and/or other means for inputting data, and outputs 630 such as a touch screen, speaker, and/or other means for outputting data to the use.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

Although the present invention has been described in connection with specific exemplary embodiments, it should be understood that various changes, substitutions, and alterations apparent to those skilled in the art can be made to the disclosed embodiments without departing from the scope of the invention as set forth in the appended claims. Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

## Claims

1. A computer-implemented method of automatically leasing assets registered with an asset-leasing platform associated with a payment network, the method comprising:
receiving, by the asset-leasing platform, a query, from a first mobile device, about a first asset registered with the asset-leasing platform, the query comprising a first asset identifier of the first asset;
using the first asset identifier to retrieve a first token of the first asset and leasing data of the first asset from an asset database of the asset-leasing platform;
transmitting the retrieved first token and leasing data toward the first mobile device;
associating a first account identifier with the first token in the asset database by the asset-leasing platform, when a first person-to-person, "P2P", payment transaction concerning the first asset is pre-authorized with reference to the first account identifier of a customer of the first mobile device; and
in response to a request received from a terminal of the first asset concerning the first account identifier, transmitting toward the terminal of the first asset a confirmation that the first account identifier is associated with the first token to cause release of the first asset in lease to the customer.

2. The computer-implemented method of claim 1, further comprising:
disassociating the first account identifier from the first token in the asset database by the asset-leasing platform to terminate the lease of the first asset, when a subsequent P2P payment transaction concerning the first asset is pre-authorized with reference to the first account identifier of the customer of the first mobile device,

3. The computer-implemented method of claim 1 or 2, wherein the first account identifier is associated with the first token in the asset database by the asset-leasing platform for a pre-defined renewal period and the first P2P transaction is pre-authorized for a periodic amount associated with the first asset, the method further comprising:
upon expiration of a pre-determined portion of the renewal period, transmitting from the asset-leasing platform toward the first mobile device a warning that the lease of the first asset is due to expire and that a second P2P payment transaction for the periodic amount is required to renew the lease.

4. The computer implemented method of claim 3, further comprising:
renewing the lease for the pre-defined renewal period in response to the second P2P payment transaction for the periodic transaction amount being pre-authorized with reference to the first account identifier.

5. The computer-implemented method of any of the preceding claims, further comprising:
receiving, by the asset-leasing platform, a query, from a second mobile device, about a second asset registered with the asset-leasing platform, the query comprising a second asset identifier of the second asset;
using the second asset identifier to retrieve a second token and leasing data of the second asset from the asset database of the asset-leasing platform;
transmitting the retrieved second token and leasing data toward the second mobile device;
associating a second account identifier with the second token in the asset database by the asset-leasing platform, when a first P2P payment transaction concerning the second asset is pre-authorized with reference the second account identifier of a customer of the second mobile device; and
in response to a request received from a terminal of the second asset concerning the second account identifier, transmitting toward the terminal of the second asset a confirmation that the second account identifier is associated with the second token to cause release of the second asset in lease to the customer of the second mobile device.

6. The computer-implemented method of claim 5, further comprising:
disassociating the second account identifier from the second token in the asset database by the asset-leasing platform, and thereby terminating the lease of the second asset, when a subsequent P2P payment transaction concerning the second asset is pre-authorized with reference to the second account identifier of the customer of the second mobile device,

7. The computer-implemented method of any preceding claim,
wherein the first mobile device and the second mobile device are the same device and the second asset is different from the first asset.

8. The computer-implemented method of claim 7, wherein, in the asset database, the first token and the second token are both associated with the first account identifier.

9. The computer-implemented method of any of claims 1 to 6, wherein the second mobile device is different from the first mobile device and the first asset and the second asset are the same and wherein the second account identifier is associated with the second asset only after the first account identifier is disassociated from the first asset.

10. The computer-implemented method of any of the preceding claims, wherein the first terminal is comprised within the first asset.

11. The computer-implemented method of any preceding claims, further comprising:
receiving by the asset-leasing platform a query from an asset owner concerning one or more assets registered with the asset-leasing platform, the query comprising corresponding one or more asset tokens;
using the one or more asset tokens to retrieve from the asset database by the asset-leasing platform a status of the one or more assets; and
returning data concerning the status of the one or more assets to the asset owner.

12. A computer-implemented method of automatically leasing an asset to a customer, the method comprising:
acquiring, by a mobile device of the customer, an asset identifier of the asset, from the asset registered with an asset-leasing platform associated with a payment network, or from a terminal of the asset;
transmitting, from the mobile device toward the asset-leasing platform, a query about the asset, the query generated by the mobile device using the asset identifier;
receiving, at the mobile device, a response to the query from the asset-leasing platform, the response comprising leasing data of the asset and a token of the asset;
generating by the mobile device a first authorization request for a person-to-person, "P2P", payment transaction and transmitting the first authorization request toward the payment network, the first authorization request comprising an account identifier associated with the customer as a sender identifier, the token as a recipient identifier, and a transaction amount indicated by the leasing data of the asset; and
after receiving at the mobile device an authorization response approving the P2P payment transaction, providing, by the mobile device to the asset or the asset terminal, the sender identifier to cause release of the asset in lease to the customer.

13. The computer-implemented method of claim 12, further comprising:
to return the asset and terminate the lease, generating by the mobile device a second authorization request for a second P2P payment transaction and transmitting the second authorization request toward the payment network, the second authorization request comprising the account identifier associated with the customer as a sender identifier and the token as a recipient identifier; and
receiving at the mobile device an authorization response approving the second P2P payment transaction, thereby indicating that the lease of the asset by the customer of the mobile device has been terminated.

14. An asset-leasing system comprising:
an asset-leasing platform implemented in one or more servers comprising at least one processor and a memory storing instructions, which when executed by the at least one processor cause the asset-leasing platform to execute the method of any of claims 1 to 11; and
an asset database for storing asset data about assets registered with the asset-leasing platform, the asset data comprising:
asset identifiers and tokens;
associations between the assets identifiers, the tokens, and the account identifiers; and
leasing data describing availability and costs of the registered assets.

15. The asset-leasing system of claim 14 further comprising:
a payment network associated with the asset-leasing platform and configured to process authorization requests concerning P2P payment transactions received with reference to the assets registered with the asset-leasing platform.
